# EUROPEAN PATENT SPECIFICATION

(11) **EP 0 637 629 B1**
(45) Date of publication and mention of the grant of the patent: **09.01.2002**
(21) Application number: 94401797.9
(22) Date of filing: 03.08.1994
(51) Int. Cl.: C11D 17/00, C11D 1/83

(54) **Microemulsion all purpose liquid cleaning compositions**
Mikroemulsion Allzweck-Flüssigreinigungsmittel
Compositions de nettoyage liquides d'usage général en micro-émulsion

(30) Priority: 04.08.1993 US 102314; 22.11.1993 US 155317; 18.01.1994 US 182523; 03.02.1994 US 192118
(43) Date of publication of application: 08.02.1995
(73) Proprietor: Colgate-Palmolive Company, New York, N.Y. 10022-7499 (US)
(72) Inventor: Mondin, Myriam, B-4100 Seraing (BE); Loth, Myriam, B-4420 Saint Nicolas (BE); Broze, Guy, B-4460 Grace-Hollogne (BE); Thomas, Barbara, Princeton, New Jersey (US); Adamy, Steven, Hamilton, New Jersey (US); Bala, Frank, Jr., Middlesex, New Jersey (US); Mehreteab, Ammanuel, Piscataway, New Jersey (US)
(74) Representative: Le Guen, Gérard

(56) References cited:
- EP-A- 0 316 726
- WO-A-95/14765
- GB-A- 1 453 385
- GB-A- 2 144 763
- GB-A- 2 190 681

## Description

### Background Of The Invention

In recent years all-purpose liquid detergents have become widely accepted for cleaning hard surfaces, e.g., painted woodwork and panels, tiled walls, wash bowls, bathtubs, linoleum or tile floors, washable wall paper, etc.. Such all-purpose liquids comprise clear and opaque aqueous mixtures of water-soluble synthetic organic detergents and water-soluble detergent builder salts. In order to achieve comparable cleaning efficiency with granular or powdered all-purpose cleaning compositions, use of water-soluble inorganic phosphate builder salts was favored in the prior art all-purpose liquids. For example, such early phosphate-containing compositions are described in U.S. Patent Nos. 2,560,839; 3,234,138; 3,350,319; and British Patent No. 1,223,739.

In view of the environmentalist's efforts to reduce phosphate levels in ground water, improved all-purpose liquids containing reduced concentrations of inorganic phosphate builder salts or non-phosphate builder salts have appeared. A particularly useful self-opacified liquid of the latter type is described in U.S. Patent No. 4,244,840.

However, these prior art all-purpose liquid detergents containing detergent builder salts or other equivalent tend to leave films, spots or streaks on cleaned unrinsed surfaces, particularly shiny surfaces. Thus, such liquids require thorough rinsing of the cleaned surfaces which is a time-consuming chore for the user.

In order to overcome the foregoing disadvantage of the prior art all-purpose liquid, U.S. Patent No. 4,017,409 teaches that a mixture of paraffin sulfonate and a reduced concentration of inorganic phosphate builder salt should be employed. However, such compositions are not completely acceptable from an environmental point of view based upon the phosphate content. On the other hand, another alternative to achieving phosphate-free all-purpose liquids has been to use a major proportion of a mixture of anionic and nonionic detergents with minor amounts of glycol ether solvent and organic amine as shown in U.S. Patent NO. 3,935,130. Again, this approach has not been completely satisfactory and the high levels of organic detergents necessary to achieve cleaning cause foaming which, in turn, leads to the need for thorough rinsing which has been found to be undesirable to today's consumers.

Another approach to formulating hard surfaced or all-purpose liquid detergent composition where product homogeneity and clarity are important considerations involves the formation of oil-in-water (o/w) microemulsions which contain one or more surface-active detergent compounds, a water-immiscible solvent (typically a hydrocarbon solvent), water and a "cosurfactant" compound which provides product stability. By definition, an o/w microemulsion is a spontaneously forming colloidal dispersion of "oil" phase particles having a particle size in the range of 25 Å to 800 Å in a continuous aqueous phase.

In view of the extremely fine particle size of the dispersed oil phase particles, microemulsions are transparent to light and are clear and usually highly stable against phase separation.

Patent disclosures relating to use of grease-removal solvents in o/w microemulsions include, for example, European Patent Applications EP 0137615 and EP 0137616 - Herbots et al; European Patent Application EP 0160762 - Johnston et al; and U.S. Patent No. 4,561,991 - Herbots et al. Each of these patent disclosures also teaches using at least 5% by weight of grease-removal solvent.

It also is known from British Patent Application GB 2144763A to Herbots et al, published March 13, 1985, that magnesium salts enhance grease-removal performance of organic grease-removal solvents, such as the terpenes, in o/w microemulsion liquid detergent compositions. The compositions of this invention described by Herbots et al. require at least 5% of the mixture of grease-removal solvent and magnesium salt and preferably at least 5% of solvent (which may be a mixture of water-immiscible non-polar solvent with a sparingly soluble slightly polar solvent) and at least 0.1% magnesium salt.

However, since the amount of water immiscible and sparingly soluble components which can be present in an o/w microemulsion, with low total active ingredients without impairing the stability of the microemulsion is rather limited (for example, up to 18% by weight of the aqueous phase), the presence of such high quantities of grease-removal solvent tend to reduce the total amount of greasy or oily soils which can be taken up by and into the microemulsion without causing phase separation.

The following representative prior art patents also relate to liquid detergent cleaning compositions in the form of o/w microemulsions: U.S. Patents Nos.. 4,472,291 - Rosario; 4,540,448 - Gauteer et al; 3,723,330 - Sheflin; etc.

Liquid detergent compositions which include terpenes, such as d-limonene, or other grease-removal solvent, although not disclosed to be in the form of o/w microemulsions, are the subject matter of the following representative patent documents: European Patent Application 0080749; British Patent Specification 1,603,047; 4,414,128; and 4,540,505. For example, U.S. Patent No. 4,414,128 broadly discloses an aqueous liquid detergent composition characterized by, by weight:
(a) from 1% to 20% of a synthetic anionic, nonionic, amphoteric or zwitterionic surfactant or mixture thereof;
(b) from 0.5% to 10% of a mono- or sesquiterpene or mixture thereof, at a weight ratio of (a):(b) lying in the range of 5:1 to 1:3; and
(c) from 0.5% 10% of a polar solvent having a solubility in water at 15°C in the range of from 0.2% to 10%. Other ingredients present in the formulations disclosed in this patent include from 0.05% to 2% by weight of an alkali metal, ammonium or alkanolammonium soap of a C₁₃-C₂₄ fatty acid; a calcium sequestrant from 0.5% to 13% by weight; non-aqueous solvent, e.g., alcohols and glycol ethers, up to 10% by weight; and hydrotropes, e.g., urea, ethanolamines, salts of lower alkylaryl sulfonates, up to 10% by weight. All of the formulations shown in the Examples of this patent include relatively large amounts of detergent builder salts which are detrimental to surface shine.

Furthermore, the present inventors have observed that in formulations containing grease-removal assisting magnesium compounds, the addition of minor amounts of builder salts, such as alkali metal polyphosphates, alkali metal carbonates, nitrilotriacetic acid salts, and so on, tends to make it more difficult to form stable microemulsion systems.

U.S. Patent 5,082,584 discloses a microemulsion composition having an anionic surfactant, a cosurfactant, nonionic surfactant, perfume and water; however, these compositions do not possess the low ecotoxicity profile and the improved interfacial tension properties as exhibited by the compositions of the instant invention.

British Patent No 1,453,385 discloses polyesterified nonionic surfactants similar to the polyesterified nonionic surfactants of the instant invention. However, these nonionic surfactants of British Patent 1,453,385 do not disclose the formula (II) portion of the instant composition. Additionally, the formulated compositions of British Patent 1,453,385 fail to disclose the critical limitations of the instant invention.

### Summary of the Invention

The present invention provides an improved, clear, liquid cleaning composition having improved interfacial tension which improves cleaning hard surface in the form of a liquid crystal or a microemulsion which is suitable for cleaning hard surfaces such as plastic, vitreous and metal surfaces having a shiny finish. More particularly, the improved cleaning compositions exhibit good grease soil removal properties due to the improved interfacial tensions, when used in undiluted (neat) form and leave the cleaned surfaces shiny without the need of or requiring only minimal additional rinsing or wiping. The latter characteristic is evidenced by little or no visible residues on the unrinsed cleaned surfaces and, accordingly, overcomes one of the disadvantages of prior art products. The instant compositions exhibit a grease release effect in that the instant compositions impede or decrease the anchoring of greasy soil on surfaces that have been cleaned with the instant compositions as compared to surfaces cleaned with a liquid crystal composition or a commercial microemulsion composition which means that the grease soiled surface is easier to clean upon subsequent cleanings. Surprisingly, these desirable results are accomplished even in the absence of polyphosphate or other inorganic or organic detergent builder salts and also in the complete absence or substantially complete absence of grease-removal solvent.

The instant compositions are more friendly for the environment due to the low ecotoxicity of the esterified polyethoxyethers nonionic surfactants used in the instant compositions.

The compositions of the instant invention have an ecotoxocity value as measured by the LC 50 test as deferred by The Organization for Economic Cooperation and Development (OECD)(of which the United States is a member) in OECD Test No. 202 of at least 0.18 ml/L measured on Daphniae microorganisms.

In one aspect, the invention generally provides a stable, clear all-purpose, hard surface cleaning composition as defined in claim 1, especially effective in the removal of oily and greasy oil, which is in the form of a substantially dilute oil-in-water microemulsion having an aqueous phase and an oil phase.
The dispersed oil phase of the o/w microemulsion is composed essentially of the water-immiscible or hardly water-soluble perfume.

Quite surprisingly although the perfume is not, per se, a solvent for greasy or oily soil, --even though some perfumes may, in fact, contain as much as 80% of terpenes which are known as good grease solvents -- the inventive compositions in dilute form have the capacity to solubilize up to 10 times or more of the weight of the perfume of oily and greasy soil, which is removed or loosened from the hard surface by virtue of the action of the anionic and nonionic surfactants, said soil being taken up into the oil phase of the o/w microemulsion.

In second aspect, the invention generally provides highly concentration microemulsion compositions as defined in claim 16, in the form of either an oil-in-water (o/w) microemulsion or a water-in-oil (w/o) microemulsion which when diluted with additional water before use can form dilute o/w microemulsion compositions.

In a third aspect of the invention, liquid crystal compositions are provided as defined in claim 18.

### Detailed Description of the Invention

The present invention relates to a stable liquid crystal or microemulsion composition approximately by weight: 0.1% to 20% of an anionic surfactant, 0.1% to 50% of a cosurfactant, 0% to 2.5% of a fatty acid, 0.1% to 20% of an esterified polyethoxyether nonionic surfactant, 0.1% to 10% of a water insoluble hydrocarbon or a perfume and the balance being water, said composition having an ecotoxocity value as measured by the LC50 test of at least 0.18 ml/L measured on Daphniae microorganisms.

According to the present invention, the role of the hydrocarbon is provided by a non-water-soluble perfume. Typically, in aqueous based compositions the presence of a solubilizers, such as alkali metal lower alkyl aryl sulfonate hydrotrope, triethanolamine, urea, etc., is required for perfume dissolution, especially at perfume levels of 1% and higher, since perfumes are generally a mixture of fragrant essential oils and aromatic compounds which are generally not water-soluble. Therefore, by incorporating the perfume into the aqueous cleaning composition as the oil (hydrocarbon) phase of the ultimate o/w microemulsion composition, several different important advantages are achieved.

First, the cosmetic properties of the ultimate cleaning composition are improved: the compositions are both clear (as a consequence of the formation of a microemulsion) and highly fragranced (as a consequence of the perfume level).

Second, the need for use of solubilizers, which do not contribute to cleaning performance, is eliminated.

Third, an improved grease release effect and an improved grease removal capacity in neat (undiluted) usage of the dilute aspect or after dilution of the concentrate can be obtained without detergent builders or buffers or conventional grease removal solvents at neutral or acidic pH and at low levels of active ingredients while improved cleaning performance can also be achieved in diluted usage.

As used herein and in the appended claims the term "perfume" is used in its ordinary sense to refer to and include any non-water soluble fragrant substance or mixture of substances including natural (i.e., obtained by extraction of flower, herb, blossom or plant), artificial (i.e., mixture of natural oils or oil constituents) and synthetically produced substance) odoriferous substances. Typically, perfumes are complex mixtures of blends of various organic compounds such as alcohols, aldehydes, ethers, aromatic compounds and varying amounts of essential oils (e.g., terpenes) such as from 0% to 80%, usually from 10% to 70% by weight, the essential oils themselves being volatile odoriferous compounds and also serving to dissolve the other components of the perfume.

In the present invention the precise composition of the perfume is of no particular consequence to cleaning performance so long as it meets the criteria of water immiscibility and having a pleasing odor. Naturally, of course, especially for cleaning compositions intended for use in the home, the perfume, as well as all other ingredients, should be cosmetically acceptable, i.e., non-toxic, hypoallergenic, etc.. The instant compositions show a marked improvement in ecotoxocity as compared to existing commercial products.

The hydrocarbon such as a perfume is present in the dilute o/w microemulsion in an amount of from 0.1% to 10% by weight, preferably from 0.4% to 6.0% by weight, especially preferably from 0.5% to 3.0% by weight, such as weight percent. If the amount of hydrocarbon (perfume) is less than 0.4% by weight it becomes more difficult to form the o/w microemulsion. In the case of the liquid crystal one need at least 0.5 weight % of perfume, more preferably 1 weight %. If the hydrocarbon (perfume) is added in amounts more than 10% by weight, the cost is increased without any additional cleaning benefit and, in fact, with some diminishing of cleaning performance insofar as the total amount of greasy or oily soil which can be taken up in the oil phase of the microemulsion will decrease proportionately.

Furthermore, although superior grease removal performance will be achieved for perfume compositions not containing any terpene solvents, it is apparently difficult for perfumers to formulate sufficiently inexpensive perfume compositions for products of this type (i.e., very cost sensitive consumer-type products) which includes less than 20%, usually less than 30%, of such terpene solvents.

Thus, merely as a practical matter, based on economic consideration, the dilute o/w microemulsion detergent cleaning compositions of the present invention may often include as much as 0.2% to 7% by weight, based on the total composition, of terpene solvents introduced thereunto via the perfume component. However, even when the amount of terpene solvent in the cleaning formulation is less than 1.5% by weight, such as up to 0.6% by weight or 0.4% by weight or less, satisfactory grease removal and oil removal capacity is provided by the inventive diluted o/w microemulsions.

Thus, for a typical formulation of a diluted o/w microemulsion according to this invention a 20 milliliter sample of o/w microemulsion containing 1% by weight of perfume will be able to solubilize, for example, up to 2 to 3 ml of greasy and/or oily soil, while retaining its form as a microemulsion, regardless of whether the perfume contains 0%, 0.1%, 0.2%, 0.3%, 0.4%, 0.5%, 0.6%, 0.7% or 0.8% by weight of terpene solvent. In other words, it is an essential feature of the compositions of this invention that grease removal is a function of the result of the microemulsion, per se, and not of the presence or absence in the microemulsion of a "greasy soil removal" type of solvent.

In place of the perfume one can employ a water insoluble paraffin or isoparaffin having 6 to 18 carbon at a concentration of 0.4 to 8.0 wt. percent, more preferably 0.4 to 3.0 wt. %.

The water-soluble organic detergent materials which are used in forming the ultimate o/w microemulsion compositions of this invention may be selected from the group consisting of water-soluble, non-soap, anionic detergents mixed with a fatty acid and an esterified polyethoxyether nonionic detergents.

Although conventional nonionic surfactants can be used in the instant compositions, the employment of such conventional nonionic in the instant composition will decrease the environmental profile of the composition as well as having an adverse effect on the grease release and grease + particulate soil removal properties of the composition.

Regarding the anionic detergent present in the o/w microemulsions any of the conventionally used water-soluble anionic detergents or mixtures of said anionic detergents and anionic detergents can be used in this invention. As used herein the term "anionic surfactant" is intended to refer to the class of anionic and mixed anionic-nonionic detergents providing detersive action.

Suitable water-soluble non-soap, anionic detergents include those surface-active or detergent compounds which contain an organic hydrophobic group containing generally 8 to 26 carbon atoms and preferably 10 to 18 carbon atoms in their molecular structure and at least one water-solubilizing group selected from the group of sulfonate, sulfate and carboxylate so as to form a water-soluble detergent. Usually, the hydrophobic group will include or comprise a C₈-C₂₂ alkyl, alkyl or acyl group. Such detergents are employed in the form of water-soluble salts and the salt-forming cation usually is selected from the group consisting of sodium, potassium, ammonium, magnesium and mono-, di- or tri-C₂-C₃ alkanolammonium, with the sodium, magnesium and ammonium cations again being preferred.

Examples of suitable sulfonated anionic detergents are the well known higher alkyl mononuclear aromatic sulfonates such as the higher alkyl benzene sulfonates containing from 10 to 16 carbon atoms in the higher alkyl group in a straight or branched chain, C₈-C₁₅ alkyl toluene sulfonates and C₈-C₁₅ alkyl phenol sulfonates.

A preferred sulfonate is linear alkyl benzene sulfonate having a high content of 3- (or higher) phenyl isomers and a correspondingly low content (well below 50%) of 2- (or lower) phenyl isomers, that is, wherein the benzene ring is preferably attached in large part at the 3 or higher (for example, 4, 5, 6 or 7) position of the alkyl group and the content of the isomers in which the benzene ring is attached in the 2 or 1 position is correspondingly low. Particularly preferred materials are set forth in U.S. Patent 3,320,174.

Other suitable anionic detergents are the olefin sulfonates, including long-chain alkene sulfonates, long-chain hydroxyalkane sulfonates or mixtures of alkene sulfonates and hydroxyalkane sulfonates. These olefin sulfonate detergents may be prepared in a known manner by the reaction of sulfur trioxide (SO₃) with long-chain olefins containing 8 to 25, preferably 12 to 21 carbon atoms and having the formula RCH=CHR₁ where R is a higher alkyl group of 6 to 23 carbons and R₁ is an alkyl group of 1 to 17 carbons or hydrogen to form a mixture of sultones and alkene sulfonic acids which is then treated to convert the sultones to sulfonates. Preferred olefin sulfonates contain from 14 to 16 carbon atoms in the R alkyl group and are obtained by sulfonating an α-olefin.

Other examples of suitable anionic sulfonate detergents are the paraffin sulfonates containing 10 to 20, preferably 13 to 17, carbon atoms. Primary paraffin sulfonates are made by reacting long-chain alpha olefins and bisulfites and paraffin sulfonates having the sulfonate group distributed along the paraffin chain are shown in U.S. Patents Nos.. 2,503,280; 2,507,088; 3,260,744; 3,372,188; and German Patent 735,096.

Examples of satisfactory anionic sulfate detergents are the C₈-C₁₈ alkyl sulfate salts and the C₈-C₁₈ alkyl sulfate salts and the C₈-C₁₈ alkyl ether polyethenoxy sulfate salts having the formula R(OC₂H₄)ₙ OSO₃M wherein n is 1 to 12, preferably 1 to 5, and M is a solubilizing cation selected from the group consisting of sodium, potassium, ammonium, magnesium and mono-, di- and triethanol ammonium ions. The alkyl sulfates may be obtained by sulfating the alcohols obtained by reducing glycerides of coconut oil or tallow or mixtures thereof and neutralizing the resultant product. On the other hand, the alkyl ether polyethenoxy sulfates are obtained by sulfating the condensation product of ethylene oxide with a C₈-C₁₈ alkanol and neutralizing the resultant product. The alkyl sulfates may be obtained by sulfating the alcohols obtained by reducing glycerides of coconut oil or tallow or mixtures thereof and neutralizing the resultant product. On the other hand, the alkyl ether polyethenoxy sulfates are obtained by sulfating the condensation product of ethylene oxide with a C₈-C₁₈ alkanol and neutralizing the resultant product. The alkyl ether polyethenoxy sulfates differ from one another in the number of moles of ethylene oxide reacted with one mole of alkanol. Preferred alkyl sulfates and preferred alkyl ether polyethenoxy sulfates contain 10 to 16 carbon atoms in the alkyl group.

The C₈-C₁₂ alkylphenyl ether polyethenoxy sulfates containing from 2 to 6 moles of ethylene oxide in the molecule also are suitable for use in the inventive compositions. These detergents can be prepared by reacting an alkyl phenol with 2 to 6 moles of ethylene oxide and sulfating and neutralizing the resultant ethoxylated alkylphenol.
Obviously, these anionic detergents will be present either in acid form or salt form depending upon the pH of the final composition, with salt forming cation being the same as for the other anionic detergents.

Of the foregoing non-soap anionic detergents, the preferred detergents are the C₉-C₁₅ linear alkylbenzene sulfonates and the C₁₃-C₁₇ paraffin or alkane sulfonates. Particularly, preferred compounds are sodium C₁₀-C₁₃ alkylbenzene sulfonate and sodium C₁₃-C₁₇ alkane sulfonate.

Generally, the proportion of the nonsoap-anionic detergent will be in the range of 0.1% to 20.0%, preferably from 1% to 7%, by weight of the dilute o/w microemulsion composition.

The polyesterified surfactants of the instant invention are a mixture of: 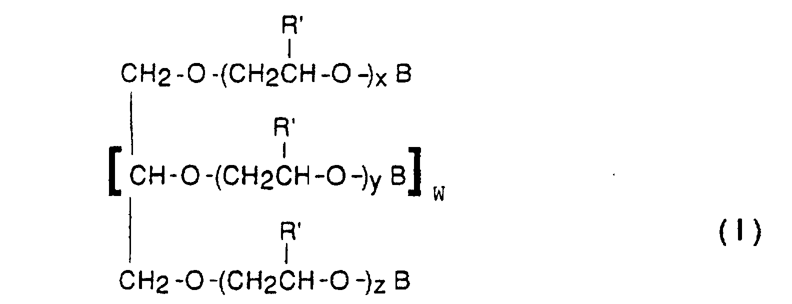 and 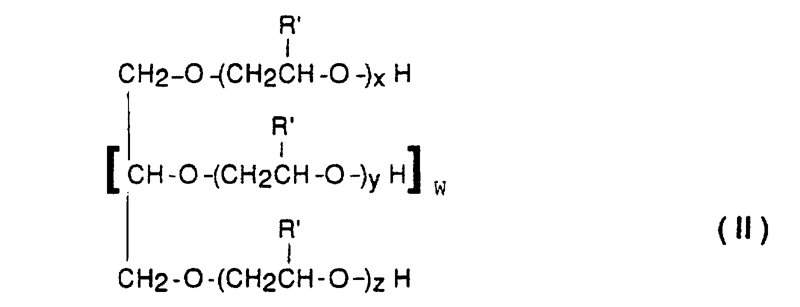 wherein w equals one to four, most preferably one. B is selected from the group consisting of hydrogen or a group represented by: 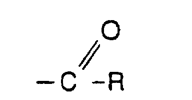 wherein R is selected from the group consisting of alkyl group having 6 to 22 carbon atoms, more preferably 12 to 16 carbon atoms and alkenyl groups having 6 to 22 carbon atoms, more preferably 12 to 16 carbon atoms, wherein a hydrogenated tallow alkyl chain or a coco alkyl chain is most preferred, wherein at least one of the B groups is represented by said 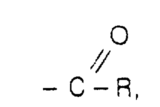 R' is selected from the group consisting of hydrogen and methyl groups; x, y and z have a value between 0 and 60, more preferably 0 to 40, provided that (x+y+z) equals 2 to 100, preferably 4 to 24 and most preferably 6 to 19, wherein in Formula (I) the ratio of monoester / diester / triester is 45 to 90 / 5 to 35 / 1 to 20, more preferably 50 to 90 / 9 to 32 / 1 to 12, wherein the ratio of Formula (I) to Formula (II) is a value between 3 to 0.33, preferably 1.5 to 0.4.

The esterified polyethoxyether surfactant (ethoxylated glycerol esters) used in the instant composition are manufactured by the Kao Corporation and sold under the trade name Levenol such as Levenol F-200 which has an average EO of 6 and a molar ratio between glycerol and coco fatty acid of 0.55 or Levenol V501/2 which has an average EO of 17 and a molar ratio between glycerol and tallow fatty acid of 1.0. The esterified polyethoxyether surfactant has a molecular weight of 400 to 1600, and a pH (50 grams / liter of water) of 5-7. The Levenol nonionic detergents are substantially non irritant to human skin and have a primary biodegradabillity higher than 90% as measured by the Wickbold method Bias-7d.

Two examples of the Levenol surfactants are Levenol V-501/2 which has 17 ethoxylated groups and is derived from tallow fatty acid with a fatty acid to glycerol ratio of 1.0 and a molecular weight of 1465 and Levenol F-200 has 6 ethoxylated groups and is derived from coco fatty acid with a fatty acid to glycerol ratio of 0.55. The Levenol (esterified polyethoxyether nonionic detergent) has ecotoxicity values of:algae growth inhibition > 100 mg/liter; acute toxicity for Daphniae > 100 mg/liter and acute fish toxicity > 100 mg/liter. The Levenol has a ready biodegradability higher than 60% which is the minimum required value according to OECD 301 B measurement to be acceptably biodegradable.

Another polyesterified nonionic surfactants useful in the instant compositions are Crovol PK-40 and Crovol PK-70 manufactured by Croda GMBH of the Netherlands. Crovol Pk40 is a polyoxyethylene (12) Palm Kernel Glyceride which has 12 EO groups. Crovol PK70 which is prefered is a polyoxyethylene (45) Palm Kernel Glyceride have 45 EO groups.

In the dilute o/w microemulsion compositions or liquid crystal compositions the esterified polyethoxyether nonionic detergent will be present in admixture with the anionic detergent.

The proportion of the esterified polyethoxyether nonionic detergent based upon the weight of the liquid crystal composition or the final dilute o/w microemulsion composition will be 0.1% to 20.0%, more preferably 1.0% to 10%, most preferably 0.5% to 6% by weight. Furthermore, in the more preferred compositions the weight ratio of nonsoap anionic detergent to the esterified polyethoxyether nonionic detergent will be in the range of 3:1 to 1:3 with especially good results being obtained at a weight ratio of 2:1.

The cosurfactant may play an essential role in the formation of the the liquid crystal composition or dilute o/w microemulsion and the concentrated microemulsion compositions. Very briefly, in the absence of the cosurfactant the water, detergent(s) and hydrocarbon (e.g., perfume) will, when mixed in appropriate proportions form either a micellar solution (low concentration) or form an oil-in-water emulsion in the first aspect of the invention. With the cosurfactant added to this system, the interfacial tension at the interface between the emulsion droplets and aqueous phase is reduced to a very low value. This reduction of the interfacial tension results in spontaneous break-up of the emulsion droplets to consecutively smaller aggregates until the state of a transparent colloidal sized emulsion. e.g., a microemulsion, is formed. In the state of a microemulsion, thermodynamic factors come into balance with varying degrees of stability related to the total free energy of the microemulsion. Some of the thermodynamic factors involved in determining the total free energy of the system are (1) particle-particle potential; (2) interfacial tension or free energy (stretching and bending); (3) droplet dispersion entropy; and (4) chemical potential changes upon formation. A thermodynamically stable system is achieved when (2) interfacial tension or free energy is minimized and (3) droplet dispersion entropy is maximized.

Thus. the role of cosurfactant in formation of a stable o/w microemulsion is to (a) decrease interfacial tension (2); and (b) modify the microemulsion structure and increase the number of possible configurations (3). Also, the cosurfactant will (c) decrease the rigidity.

Generally, an increase in cosurfactant concentration results in a wider temperature range of the stability of the product.

Four major classes of compounds have been found to provide highly suitable cosurfactants for the microemulsion over temperature ranges extending from 5°C to 43°C for instance; (1) water-soluble C₃-C₄ alkanols, polypropylene glycol of the formula HO(CH₃CHCH₂O)ₙH wherein n is a number from 2 to 18 and monoalkyl ethers and esters of ethylene glycol and propylene glycol having the structural formulas R(X)ₙOH and R₁(X)ₙOH wherein R is C₁-C₆ alkyl, R₁ is C₂-C₄ acyl group, X is (OCH₂CH₂) or (OCH₂CH₃CH) and n is a number from 1 to 4; (2) aliphatic mono- and di-carboxylic acids containing 2 to 10 carbon atoms, preferably 3 to 6 carbons in the molecule; (3) C₉-C₁₅ alkyl ether polyethenoxy carboxylic acids of the structural formula R(OC₂H₄)ₙOX COOH wherein R is C₉-C₁₅ alkyl, n is a number from 4 to 12 and X is selected from the group consisting of CH₂, C(O)R₁ and C(O), wherein R₁ is a C₁-C₃ alkylene group . and (4) mono-, di-, and triethyl phosphate.
Additionally, mixtures of two or more of the four classes of cosurfactant compounds may be employed where specific pH's are desired.

When the mono- and di-carboxylic acid (Class 2) cosurfactants are employed in the instant microemulsion compositions at a concentration of 2 to 10 wt. %, the microemulsion compositions can be used as a cleaners for bathtubs and other hard surfaced items, which are acid resistant thereby removing lime scale, soap scum and greasy soil from the surfaces of such items damaging such surfaces. If these surfaces are of zirconium white enamel, they can be damaged by these compositions.

An aminoalkylene phophonic acid at a concentration of 0.01 to 0.2 wt. % can be optionally used in conjunction with the mono- and di-carboxylic acids, wherein the aminoalkylene phophonic acid helps prevent damage to zirconium white enamel surfaces. Additionally, 0.05 to 1% of phosphoric acid can be used in the composition.

Methanol and ethanol are explicitly excluded from the instant composition because of their low flash point.

Representative members of the polypropylene glycol include dipropylene glycol and polypropylene glycol having a molecular weight of 200 to 1000, e.g., polypropylene glycol 400. Other satisfactory glycol ethers are ethylene glycol monobutyl ether (butyl cellosolve), diethylene glycol monobutyl ether (butyl carbitol), triethylene glycol monobutyl ether, mono, di, tri propylene glycol monobutyl ether, tetraethylene glycol monobutyl ether, propylene glycol tertiary butyl ether, ethylene glycol monoacetate and dipropylene glycol propionate. When these glycol type cosurfactants are at a concentration of at least 1.0 weight %, more preferably at leat 2.0 weight % in combination with a perfume at a concentration of at leat 0.5 weight %, more preferably 1.5 weight % one can form a liquid crystal composition

Representative members of the aliphatic carboxylic acids include C₃-C₆ alkyl and alkenyl monobasic acids and dibasic acids such as glutaric acid and mixtures of glutaric acid with adipic acid and succinic acid, as well as mixtures of the foregoing acids.

While all of the aforementioned glycol ether compounds and acid compounds provide the described stability, the most preferred cosurfactant compounds of each type, on the basis of cost and cosmetic appearance (particularly odor), are diethylene glycol monobutyl ether and a mixture of adipic, glutaric and succinic acids, respectively. The ratio of acids in the foregoing mixture is not particularly critical and can be modified to provide the desired odor. Generally, to maximize water solubility of the acid mixture glutaric acid, the most water-soluble of these three saturated aliphatic dibasic acids, will be used as the major component.
Generally, weight ratios of adipic acid: glutaric acid:succinic acid is 1-3:1-8:1-5, preferably 1-2:1-6:1-3, such as 1:1:1, 1:2:1, 2:2:1, 1:2:1.5, 1:2:2, 2:3:2, etc. can be used with equally good results.

Still other classes of cosurfactant compounds providing stable microemulsion compositions at low and elevated temperatures are the aforementioned alkyl ether polyethenoxy carboxylic acids and the mono-, di- and triethyl esters of phosphoric acid such as triethyl phosphate.

The amount of cosurfactant required to stabilize the liquid crystal compositions or the microemulsion compositions will, of course, depend on such factors as the surface tension characteristics of the cosurfactant, the type and amounts of the primary surfactants and perfumes, and the type and amounts of any other additional ingredients which may be present in the composition and which have an influence on the thermodynamic factors enumerated above. Generally, amounts of cosurfactant in the range of from 0% to 50%, preferably from 0.5% to 15%, especially preferably from 1% to 7%, by weight provide stable dilute o/w microemulsions for the above-described levels of primary surfactants and perfume and any other additional ingredients as described below.

As will be appreciated by the practitioner, the pH of the final microemulsion will be dependent upon the identity of the cosurfactant compound, with the choice of the cosurfactant being effected by cost and cosmetic properties, particularly odor. For example, microemulsion compositions which have a pH in the range of 1 to 10 may employ either the class 1 or the class 4 cosurfactant as the sole cosurfactant, but the pH range is reduced to 1 to 8.5 when the polyvalent metal salt is present. On the other hand, the class 2 cosurfactant can only be used as the sole cosurfactant where the product pH is below 3.2. Similarly, the class 3 cosurfactant can be used as the sole cosurfactant where the product pH is below 5. However, where the acidic cosurfactants are employed in admixture with a glycol ether cosurfactant, compositions can be formulated at a substantially neutral pH (e.g., pH 7±1.5, preferably 7±0.2).

The ability to formulate neutral and acidic products without builders which have grease removal capacities is a feature of the present invention because the prior art o/w microemulsion formulations most usually are highly alkaline or highly built or both.

The instant microemulsion formulas explicitly exclude alkali metal silicates and alkali metal builders such as alkali metal polyphosphates, alkali metal carbonates, alkali metal phosphonates and alkali metal citrates because these materials, if used in the instant composition, would cause the composition to have a high pH as well as leaving residue on the surface being cleaned.

In addition to tneir excellent capacity for cleaning greasy and oily soils, the low pH o/w microemulsion formulations also exhibit excellent cleaning performance and removal of soap scum and lime scale in neat (undiluted) as well as in diluted usage.

The final essential ingredient in the inventive microemulsion compositions having improved interfacial tension properties is water. The proportion of water in the microemulsion compositions generally is in the range of 20% to 97%, preferably 70% to 97% by weight of the usual diluted o/w microemu sion composition.

As believed to have been made clear from the foregoing description, the dilute o/w microemulsion liquid all-purpose cleaning compositions of this invention are especially effective when used as is, that is, without further dilution in water, since the properties of the composition as an o/w microemulsion are best manifested in the neat (undiluted) form. However, at the same time it should be understood that depending on the levels of surfactants, cosurfactants, perfume and other ingredients, some degree of dilution without disrupting the microemulsion, per se, is possible. For example, at the preferred low levels of active surfactant compounds (i.e., primary anionic and nonionic detergents) dilutions up to 50% will generally be well tolerated without causing phase separation, that is, the microemulsion state will be maintained.

However, even when diluted to a great extent, such as a 2- to 10-fold or more dilution, for example, the resulting compositions are still effective in cleaning greasy, oily and other types of soil. Furthermore, the presence of magnesium ions or other polyvalent ions, e.g., aluminum, as will be described in greater detail below further serves to boost cleaning performance of the primary detergents in dilute usage.

On the other hand, it is also within the scope of this invention to formulate highly concentrated microemulsions which will be diluted with additional water before use.

The present invention also relates to a stable concentrated microemulsion or acidic microemulsion composition as defined in claim 16, wherein the composition has an ecotoxocity as measured by the LC 50 test of at least 0.18 ml/L measured on Daphniae microorganisms.

The present invention also relates to a stable liquid crystal microemulsion or acidic microemulsion composition as defined in claim 18, wherein the composition has an ecotoxocity as measured by the LC 50 test of at least 0.18 ml/L measured on Daphniae microorganisms.

Such concentrated microemulsions can be diluted by mixing with up to 20 times or more, preferably 4 to 10 times their weight of water to form o/w microemulsions similar to the diluted microemulsion compositions described above. While the degree of dilution is suitably chosen to yield an o/w microemulsion composition after dilution, it should be recognized that during the course of dilution both microemulsion and non-microemulsions may be successively encountered.

In addition to the above-described essential ingredients required for the formation of the liquid crystal composition or the microemulsion composition, the compositions of this invention may often and preferably do contain one or more additional ingredients which serve to improve overall product performance.

One such ingredient is an inorganic or organic salt of oxide of a multivalent metal cation, particularly Mg⁺⁺. The metal salt or oxide provides several benefits including improved cleaning performance in dilute usage, particularly in soft water areas, and minimized amounts of perfume required to obtain the microemulsion state. Magnesium sulfate, either anhydrous or hydrated (e.g., heptahydrate), is especially preferred as the magnesium salt. Good results also have been obtained with magnesium oxide, magnesium chloride, magnesium acetate, magnesium propionate and magnesium hydroxide. These magnesium salts can be used with formulations at neutral or acidic pH since magnesium hydroxide will not precipitate at these pH levels.

Although magnesium is the preferred multivalent metal from which the salts (inclusive of the oxide and hydroxide) are formed, other polyvalent metal ions also can be used provided that their salts are nontoxic and are soluble in the aqueous phase of the system at the desired pH level. Thus, depending on such factors as the pH of the system, the nature of the primary surfactants and cosurfactant, and so on, as well as the availability and cost factors, other suitable polyvalent metal ions include aluminum, copper, nickel, iron, calcium, etc. It should be noted, for example, that with the preferred paraffin sulfonate anionic detergent calcium salts will precipitate and should not be used. It has also been found that the aluminum salts work best at pH below 5 or when a low level, for example 1 weight percent, of citric acid is added to the composition which is designed to have a neutral pH. Alternatively, the aluminum salt can be directly added as the citrate in such case. As the salt, the same general classes of anions as mentioned for the magnesium salts can be used, such as halide (e.g., bromide, chloride), sulfate, nitrate, hydroxide, oxide, acetate, propionate, etc.

Preferably, in the dilute compositions the metal compound is added to the composition in an amount sufficient to provide at least a stoichiometric equivalence between the anionic surfactant and the multivalent metal cation. For example, for each gram-ion of Mg++ there will be 2 gram moles of paraffin sulfonate, alkylbenzene sulfonate, etc., while for each gram-ion of A1³⁺ there will be 3 gram moles of anionic surfactant. Thus, the proportion of the multivalent salt generally will be selected so that one equivalent of compound will neutralize from 0.1 to 1.5 equivalents, preferably 0.9 to 1.4 equivalents, of the acid form of the anionic detergent.

At higher concentrations of anionic detergent, the amount of multivalent salt will be in range of 0.5 to 1 equivalents per equivalent of anionic detergent.

The liquid crystal composition or the o/w microemulsion compositions will include from 0% to 2.5%, preferably from 0.1% to 2.0% by weight of the composition of a C8-C₂₂ fatty acid or fatty acid soap as a foam suppressant. The addition of fatty acid or fatty acid soap provides an improvement in the rinseability of the composition whether applied in neat or diluted form. Generally, however, it is necessary to increase the level of cosurfactant to maintain product stability when the fatty acid or soap is present.
If more than 2.5wt % of the fatty acid is used in the instant compositions, the composition will become unstable at low temperatures as well as having an objectionable smell.

As example of the fatty acids which can be used as such or in the form of soap, mention can be made of distilled coconut oil fatty acids, "mixed vegetable" type fatty acids (e.g. high percent of saturated, mono-and/or polyunsaturated C₁₈ chains); oleic acid, stearic acid, palmitic acid, eiocosanoic acid, and the like, generally those fatty acids having from 8 to 22 carbon atoms being acceptable.

The all-purpose liquid cleaning composition of this invention may, if desired, also contain other components either to provide additional effect or to make the product more attractive to the consumer. The following are mentioned by way of example: Colors or dyes in amounts up to 0.5% by weight; bactericides in amounts up to 1% by weight; preservatives or antioxidizing agents, such as formalin, 5-bromo-5-nitro-dioxan-1,3; 5-chloro-2-methyl-4-isothaliazolin-3-one, 2,6-di-tert.butyl-p-cresol, etc., in amounts up to 2% by weight; and pH adjusting agents, such as sulfuric acid or sodium hydroxide, as needed. Furthermore, if opaque compositions are desired, up to 4% by weight of an opacifier may be added.

The instant compositions of the instant invention explicitly exclude zwitterionic surfactant such as betaines because these zwetterionic surfactants are extremely high foaming which, if used in the instant composition, would cause the instant compositions to have to high a foam profile and that too much foam would leave residue on the surface being cleaned.

In final form, the all-purpose liquids are clear oil-in-water microemulsions or liquid crystal compositions and exhibit stability at reduced and increased temperatures. More specifically, such compositions remain clear and stable in the range of 5°C to 50°C, especially 10°C to 43°C. Such compositions exhibit a pH in the acid or neutral range depending on intended end use. The liquid microemulsion compositions are readily pourable and exhibit a viscosity in the range of 6 to 60 milliPascal . second (mPas.) as measured at 25°C. with a Brookfield RVT Viscometer using a #1 spindle rotating at 20 RPM. Preferably, the viscosity is maintained in the range of 10 to 40 mPas.

The compositions are directly ready for use or can be diluted as desired and in either case no or only minimal rinsing is required and substantially no residue or streaks are left behind. Furthermore, because the compositions are free of detergent builders such as alkali metal polyphosphates they are environmentally acceptable and provide a better "shine" on cleaned hard surfaces.

When intended for use in the neat form, the liquid compositions can be packaged under pressure in an aerosol container or in a pump-type sprayer for the so-called spray-and-wipe type of application.

Because the compositions as prepared are aqueous liquid formulations and since no particular mixing is required to form the o/w microemulsion, the compositions are easily prepared simply by combining all the ingredients in a suitable vessel or container. The order of mixing the ingredients is not particularly important and generally the various ingredients can be added sequentially or all at once or in the form of aqueous solutions of each or all of the primary detergents and cosurfactants can be separately prepared and combined with each other and with the perfume. The magnesium salt, or other multivalent metal compound, when present, can be added as an aqueous solution thereof or can be added directly. It is not necessary to use elevated temperatures in the formation step and room temperature is sufficient.

It is contemplated within the scope of the instant invention that the instant esterified polyethoxyether nonionic surfactants can be employed in hard surface cleaning compositions such as wood cleaners, window cleaners and light duty liquid cleaners as a total or partial replacement for the anionic and/or nonionic surfactants of these hardsurface cleaning compositions, wherein improvements in a grease release effect in desirable.

The following examples illustrate liquid cleaning compositions of the described invention. Unless otherwise specified, all percentages are by weight. The exemplified compositions are illustrative only and do not limit the scope of the invention. Unless otherwise specified, the proportions in the examples and elsewhere in the specification are by weight.

### Example 1

The following compositions in wt. % were prepared:

| | **A** | **B** | **C** | **D** | **E** | **F** | **Mr. Proper** | **St Marc Lemon** |
|---|---|---|---|---|---|---|---|---|
| Sodium C₁₃-C₁₇ Paraffin sulfonate | 4.7 | 4.3 | 4 | 4.3 | 14.1 | 7.05 | 2.9 | - |
| EO/PO nonionic | - | - | - | - | - | - | - | 3.2 |
| Levenol F-200 | 2.3 | 2.2 | 2 | 2.2 | 6.3 | 3.45 | - | - |
| C13-C15 EO 14 nonionic | - | - | - | - | - | - | 3.3 | - |
| DEGMBE | 4 | 4 | 3.5 | 4 | 12 | 6 | 4.4 | 3 |
| Fatty acid | 0.75 | 0.5 | 0.4 | 0.75 | 2.25 | 1.125 | 0.65 | 0.3 |
| MgSO4 7 H2O | 2.2 | 2 | 1.9 | 2.2 | 6.3 | 3.15 | - | - |
| Perfume (a) | 0.8 | 0.75 | 0.9 | 0.7 | 2.4 | 1.2 | present | present |
| Sodium Citrate | - | - | - | - | - | - | 3.2 | - |
| Water | Bal | Bal | Bal | Bal | Bal | Bal | Bal | Bal |
| pH | 7 | 7 | 7 | 7 | 7 | 7 | 9.5 | 7 |
| Degreasing test | | | | | | | | |
| Neat (b) | 30 | 35 | 35 | 35 | 30 | 30 | 70 | >100 |
| Dilute (b) | 45 | 60 | 60 | 60 | 45 | 45 | >90 | 90 |
| Residue | Equal to ref. | Equal to ref. | Equal to ref. | Equal to ref. | Equal to ref. | Equal to ref. | Worse | Equal to ref. |
| Foam in hard Water | Equal to ref. | Equal to ref. | Equal to ref. | Equal to ref. | Equal to ref. | Equal to ref. | Equal to ref. | Equal to ref. |
| LC50-Ecotoxicity on Daphniae (c) | 0.18 ml/l | - | - | - | - | - | 0.1 ml/l | 0.033 ml/l |

| | **G** | **H** | **I** |
|---|---|---|---|
| Linear alkyl benzene sulfonic acid | 4.7 | 4.5 | 5 |
| NaOH to reach pH 7 | 0.6 | 0.57 | 0.64 |
| Levenol F-200 | 2.3 | 2.5 | 2 |
| DEGMBE | 5.6 | 6 | 6.2 |
| Fatty acid | 0.75 | 0.75 | 0.75 |
| MgSO4 7 H2O | 2.15 | 2.06 | 2.3 |
| Perfume (a) | 0.8 | 0.8 | 0.8 |
| Water | Bal | Bal | Bal |
| pH | 7 | 7 | 7 |

(a) contains 25% by weight of terpenes.
(b) the lower the number of strokes, the better the degreasing performance.
(c) the higher the results, the lower the ecotoxicity.

Furthermore, "dissolution power" of the o/w microemulsion of this example is compared to the "dissolution power" of an identical composition except that an equal amount (5 weight percent) of sodium cumene sulfonate hydrotrope is used in place of the diethylene glycol monobutyl ether cosurfactant in a test wherein equal concentrations of heptane are added to both compositions. The o/w microemulsion of this invention solubilizes 12 grams of the water immiscible substance as compared to 1.4 grams in the hydrotrope containing liquid composition.

In a further comparative test using blue colored cooking oil--a fatty triglyceride soil --, the composition of Example 1 is clear after the addition of 0.2 grams of cooking oil whereas the cooking oil floats on the top of the composition containing the sulfonate hydrotrope.

When the concentration of perfume is reduced to 0.4% in the composition of Example 1, a stable o/w microemulsion composition is obtained. Similarly, a stable o/w microemulsion is obtained when the concentration of perfume is increased to 2% by weight and the concentration of cosurfactant is increased to 6% by weight in Example 1.

### Example 2

The example illustrates a typical formulation of a "concentrated" o/w microemulsion based on the present invention:

| | % by weight |
|---|---|
| Coco fatty acid | 4 |
| Sodium C₁₃-C₁₇ Paraffin Sulfonate | 20.75 |
| Esterified polyethoxyether nonionic surfactant | 12 |
| Diethylene glycol monobutyl ether | 20 |
| Perfume (a) | 12.5 |
| Water | Bal to 100 |
| pH: 7.0 ± 0.2 | |

This concentrated formulation can be easily diluted, for example, five times with tap water, to yield a diluted o/w microemulsion composition. Thus, by using microemulsion technology it becomes possible to provide a product having high levels of active detergent ingredients and perfume, which has high consumer appeal in terms of clarity, odor and stability, and which is easily diluted at the usual usage concentration for similar all-purpose hard surface liquid cleaning compositions, while retaining its cosmetically attractive attributes.

Naturally, these formulations can be used, where desired, without further dilution and can also be used at full or diluted strength to clean soiled fabrics by hand or in an automatic laundry washing machine.

### Example 3

This example illustrates a diluted o/w microemulsion composition according to the invention having an acidic pH and which also provides improved cleaning performance on soap scum and lime scale removal as well as for cleaning greasy soil.

| | % by weight |
|---|---|
| Sodium C₁₃-C₁₇ paraffin sulfonate | 4.7 |
| esterified polyethoxyether nonionic surfactant | 2.3 |
| Mg SO₄ 7H₂0 | 2.2 |
| Mixture of succinic acid/glutaric acid/adipic acid (1:1:1) | 5 |
| Perfume (d) | 1.0 |
| Water, minors (dye) | balance to 100 |
| Phosphonic acid | 0.2 |
| Amino tris - (methylene-phosphonic acid) | 0.03 |
| pH=3 ± 0.2 | |

| | |
|---|---|
| (d) contains 40% by weight of terpene | |

### Example 4

Formula A of Example I was tested for the removal of a combination of grease and particulate soil as well as for a grease release effect and compared to commercial Ajax^{tm}NME

### I. Grease + particulate soil removal;

### Test Method

A) Soil composition:
   70 g of mineral oil
   35 g of particulate soil (vacuum cleaner dust + 1% of carbon black)
   35 g C₂Cl₄
B) Soil preparation:
   - Weigh cleaned/dried glass tiles
   - Soil the tiles with the grease + particulate soil
   - Bake the tiles 1 hour at 80°C
   - Weigh the soiled tiles which aged 2 hours at RT.
C) Soil removal:
   The soiled tiles are soaked for 15 minutes at RT in the test products, then they are delicately rinsed with tap water.
   After drying 45 minutes at 50°C, the tiles are weighed again.

### Results

| | | Grease + particulate soil |
|---|---|---|
| % of removal mean of 6 tiles | | |
| Commercial Ajax^{tm} NME | | 60 |
| Formule A of Example I | | 95 |

Formula A exhibits improved grease + particulate soil removal over the Commercial Ajax^{tm} NME

### II. Grease release effect

### Test Method

A) Soil composition:
   20% hardened tallow
   80% beef tallow
   fat blue dye
B) Soil preparation:
   The fat mixture is heated and sprayed with an automatic spraying device on cleaned and dried ceramic tiles.
C) Soil removal:
   Product used neat: 2.5 g on sponge
   Product used dilute: 1.2% sol in tap water - 10 ml of the solution on the sponge
   The cleaning procedure is done with the gardner device for both product concentrations.

### Results

### A) On treated ceramic tiles (treated with the product before spraying the soil)

| | Neat | Dilute |
|---|---|---|
| | Number of Strokes | |
| First grease layer deposition | mean of 4 tiles | mean of 6 tiles |
| Commercial Current Ajax^{tm} NME | 27 | 19 |
| | 19 | 5* |
| Second grease layer deposition on the same tile | mean of 4 tiles | mean of 6 tiles |
| Commercial Ajax^{tm} NME | 25 | 48 |
| | 25 | 18* |

| | | |
|---|---|---|
| * highly significant difference | | |

### B) On untreated ceramic tiles

In addition to the previous test, the 3 following procedures were used to verify that Formula A remains on the surface after rinsing or wiping. After the first cleaning procedure and before the second spraying:
1) the tiles were allowed to dry in open air
2) the surface was wiped with paper towel
3) the surface was rinsed with wet sponge
1) dry in open air

| | Neat | Dilute |
|---|---|---|
| | Number of Strokes | |
| First grease layer deposition | mean of 4 tiles | mean of 6 tiles |
| Commercial Ajax^{tm} NME | 29 | 30 |
| Formula A | 27 | 32 |
| Second grease layer deposition on the same tile | mean of 4 tiles | mean of 6 tiles |
| Commercial Ajax^{tm} NME | 33 | 21 |
| Formula A | 30 | 6* |

| | | |
|---|---|---|
| * highly significant difference | | |

2) wipe dry the surface

| | Neat | Dilute |
|---|---|---|
| | Number of Strokes | |
| First grease layer deposition | mean of 4 tiles | mean of 6 tiles |
| Commercial Ajax^{tm} NME | 29 | 30 |
| Formula A | 27 | 32 |
| Second grease layer deposition on the same tile | mean of 4 tiles | mean of 6 tiles |
| Commercial Ajax^{tm} NME | 35 | 46 |
| Formula A | 30 | 48.5 |

3) wet wiping the surface

| | Neat | Dilute |
|---|---|---|
| | Number of Strokes | |
| First grease layer deposition | mean of 4 tiles | mean of 6 tiles |
| Commercial Ajax^{tm} NME | 29 | 30 |
| Formula A | 27 | 32 |
| Second grease layer deposition on the same tile | mean of 4 tiles | mean of 6 tiles |
| Commercial Ajax^{tm} NME | 34 | 58 |
| Formula A | 27 | 41 ** |

| | | |
|---|---|---|
| ** after 5 strokes, 65% of the grease is already removed | | |

These results clearly demonstrate the important grease release effect obtained with Formula A especially when the product is used dilute.

### Example 5

The following liquid crystal compositions were prepared by simple mixing procedure

| | **A** | **B** | **C** |
|---|---|---|---|
| Sodium C₁₃-C₁₇ Paraffin sulfonate | 4.3 | 4.3 | 4.3 |
| Levenol F-200 | 2.2 | 2.2 | 2.2 |
| Propylene glycol monbutyl ether | 3.5 | - | - |
| Dipropylene glycol monbutyl ether | - | 3.5 | - |
| Tripropylene glycol monbutyl ether | - | - | 3.5 |
| Fatty acid | 0.5 | 0.5 | 0.5 |
| MgSO4 7 H2O | 1.6 | 1.6 | 1.6 |
| Perfume (a) | 1 | 1.5 | 1.5 |
| Water | Bal | Bal | Bal |
| pH | 7 | 7 | 7 |

### Example 6

The following optically clear microemulsion compositions were made by forming first a solution by mixing at 25°C water, magnesium lauryl ether sulfate, Levenol V-510/2 and 1-Pentanol. To this solution with mixing at 25°C was added the dodecane to form the optically clear microemulsion. The formula are expressed in weight percent.

| | **A** | **B** | **C** | **D** | **E** | **F** | **G** | **H** | **I** |
|---|---|---|---|---|---|---|---|---|---|
| Magnesium Lauryl sulfate | 7 | 2.04 | 3.04 | 4.99 | 3.01 | 6.38 | 5.01 | 4.02 | 2.99 |
| Levenol V-501/2 | 3.2 | 8.15 | 7.1 | 5.1 | 7.06 | 3.9 | 5.06 | 6.24 | 7.2 |
| 1-Pentanol | 1.19 | 1.03 | 4.1 | 4.05 | 5.05 | 5.67 | 1.07 | 1.05 | 1.13 |
| Dodecane | 1.29 | 0.73 | 17.36 | 11.26 | 20.07 | 15.2 | 2.86 | 3.05 | 2.9 |
| water | Bal | Bal | Bal | Bal | Bal | Bal | Bal | Bal | Bal |
| | | | | | | | | | |

In summary, the described invention broadly relates to an improvement in microemulsion compositions containing an anionic surfactant, an esterified polyethoxyether nonionic surfactant, a fatty acid, one of the specified cosurfactants, a hydrocarbon ingredient and water which comprise the use of a water-insoluble, odoriferous perfume as the essential hydrocarbon ingredient in a proportion sufficient to form either a dilute o/w microemulsion composition or liquid crystal composition containing, by weight, 0.1% to 2.0% of an anionic detergent, 0.1% to 20.0% an esterified polyethoxyether nonionic surfactant, 0% to 2.5% of a fatty acid, 0% to 50% of cosurfactant, 0.4% to 10% of perfume and the balance being water, wherein the liquid crystal composition is at least 1.0 weight % and the concentration of cosurfactant is at leat 1.0 weight %.

## Claims

1. A stable microemulsion composition comprising by weight: 0.1 % to 20 % of an anionic surfactant, 0.1 % to 50 % of a cosurfactant, 0 % to 2.5 % of a fatty acid, 0.1 % to 20 % of an esterified polyethoxyether nonionic surfactant, 0.1 % to 10 % of a water insoluble hydrocarbon or a perfume and the balance being water wherein said esterified polyethoxyether nonionic detergent is a mixture of: 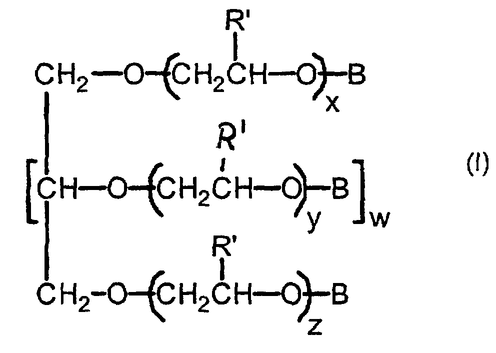 and 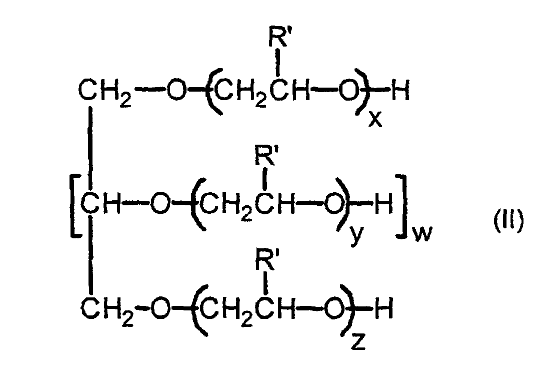 wherein w equals one to four ; B is selected from the group consisting of hydrogen or a group represented by : 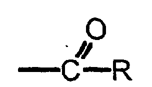 with R being selected from the group consisting of alkyl group having 6 to 22 carbon atoms, more preferably 12 to 16 carbon atoms and alkenyl groups having 6 to 22 carbon atoms, more preferably 12 to 16 carbon atoms, and wherein at least one of the B groups is represented by said 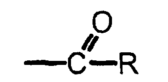 R' being selected from the group consisting of hydrogen and methyl groups ; x, y and z having a value between 0 and 60, provided that (x+y+z) equals 2 to 100, with in formula (I) the ratio of monoester / diester / triester being 45 to 90 / 5 to 35 / 1 to 20, and the ratio of formula (I) to formula (II) being a value between 3 to 0.33.

2. A stable, clear, all-purpose, hard surface cleaning composition which is especially effective in the removal of oily and greasy soil being in the form of an oil-in-water microemulsion (o/w), the aqueous phase of said microemulsion composition comprising by weight: from 0.1 % to 20 % of an anionic surfactant; from 0 % to 2.5 % of a fatty acid; from 0.1 % to 10 % of an esterified polyethoxyether nonionic surfactant; from 0.1 % to 50 % of a water-miscible cosurfactant having substantially no ability to dissolve oily or greasy soil selected from the group consisting of water-soluble C₃-C₄ alkanols, polypropylene glycol and C₁-C₄ alkyl ethers and esters of ethylene glycol or propylene glycol, aliphatic mono- and di-carboxylic acids containing 3 to 6 carbons in the molecule, C₉-C₁₅ alkyl ether polyethenoxy carboxylic acids of the structural formula R(OC₂H₄)ₙOX COOH wherein R is C₉-C₁₅ alkyl, n is a number from 4 to 12 and X is selected from the group consisting of CH₂, C(O)R₁ and C(O), wherein R₁ is a C₁-C₃ alkylene group and mono-, di- and triethyl phosphate and water; the oil phase of said microemulsion consisting essentially of a water-immiscible or hardly water-soluble hydrocarbon ingredient in an amount of from 0.1 % to 10 % by weight of the entire composition, wherein said esterified polyethoxyether nonionic surfactant is a mixture of: 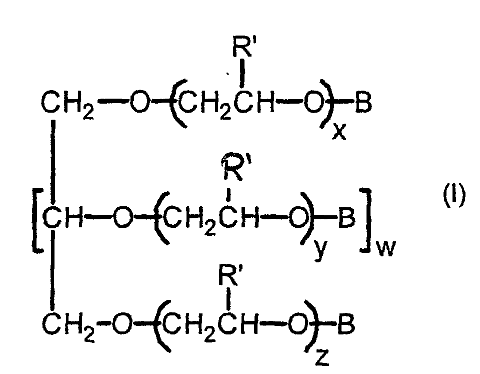 and 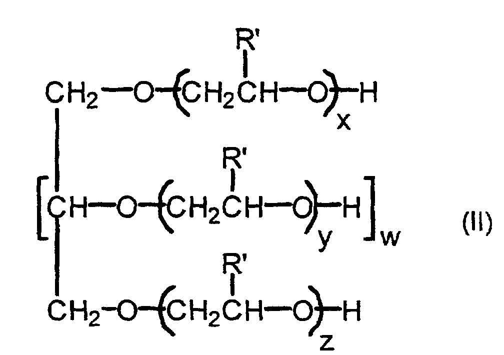 wherein w equals one to four ; B is selected from the group consisting of hydrogen or a group represented by: 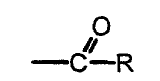 wherein R is selected from the group consisting of alkyl group having 6 to 22 carbon atoms, and alkenyl groups having 6 to 22 carbon atoms, and wherein at least one of the B groups is represented by said 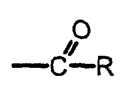 R' being selected from the group consisting of hydrogen and methyl groups ; x, y and z having a value between 0 and 60, provided that (x+y+z) equals 2 to 100, with in formula (I) the ratio of monoester / diester / triester being 45 to 90 / 5 to 35 / 1 to 20, with the ratio of formula (I) to formula (II) being a value between 3 to 0.33.

3. The cleaning composition of Claim 2 which further contains a salt of a multivalent metal cation in an amount sufficient to provide from 0.5 to 1.5 equivalents of said cation per equivalent of said anionic detergent.

4. The cleaning composition of Claim 3 wherein the multivalent metal cation is magnesium or aluminium.

5. The cleaning composition of Claim 3, wherein said composition contains 0.9 to 1.4 equivalents of said cation per equivalent of anionic detergent.

6. The cleaning composition of Claim 4 wherein said multivalent salt is magnesium oxide, magnesium chloride or magnesium sulfate.

7. The cleaning composition of Claim 2 wherein said fatty acid has 8 to 22 carbon atoms.

8. The cleaning composition of Claim 2 which contains from 0.5 to 15 % by weight of said cosurfactant and from 0.4 % to 3.0 % by weight of said hydrocarbon.

9. The cleaning composition of Claim 2 wherein the cosurfactant is a water soluble glycol ether.

10. The cleaning composition of Claim 9 wherein the glycol ether is selected from the group consisting of ethylene glycol monobutyl ether, diethylene glycol monobutyl ether, triethylene glycol monobutyl ether, polypropylene glycol having an average molecular weight of from 200 to 1,000 and propylene glycol tert.butyl ether, mono, di, tri propylene glycol monobutyl ether.

11. The cleaning composition of Claim 10 wherein the glycol ether is ethylene glycol monobutyl ether or diethylene glycol monobutyl ether.

12. The cleaning composition of Claim 2 wherein the cosurfactant is a C₃-C₆ aliphatic carboxylic acid selected from the group consisting of acrylic acid, propionic acid, glutaric acid, mixtures of glutaric acid and succinic acid and adipic acid and their mixtures.

13. The cleaning composition of Claim 12 wherein the aliphatic carboxylic acid is a mixture of adipic acid, glutaric acid and succinic acid.

14. The cleaning composition of Claim 2 wherein the anionic surfactant is a C₉-C₁₅ alkyl benzene sulfonate or a C₁₀-C₂₀ alkane sulfonate.

15. The cleaning composition of Claim 2, wherein the anionic detergent and the esterified polyethoxyether nonionic detergent are present in a weight ratio of 3:1 to 1:3.

16. A stable concentrated microemulsion composition comprising by weight:
(a) 1 to 30 % of an anionic surfactant;
(b) 0.5 to 15 % of an esterified polyethoxyether nonionic surfactant;
(c) 0 to 2.5 % of a fatty acid;
(d) 2 to 30 % of a cosurfactant;
(e) 0.4 to 10 % of a water insoluble hydrocarbon or perfume;
(f) 0 to 18 % of at least one dicarboxylic acid;
(g) 0 to 0.2 % of an aminoalkylene phosphonic acid;
(h) 0 to 1.0 % of phosphoric acid;
(i) 0 to 15 % of magnesium sulfate heptahydrate; and
(j) the balance being water, with said esterified polyethoxyether nonionic being a mixture of: 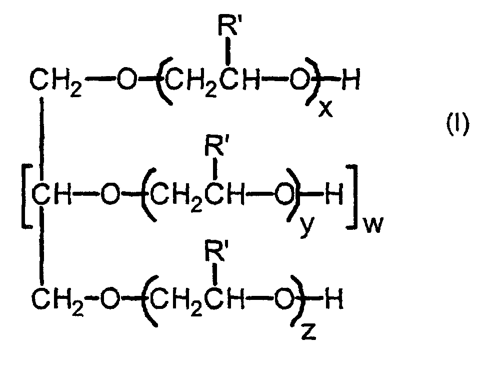 and 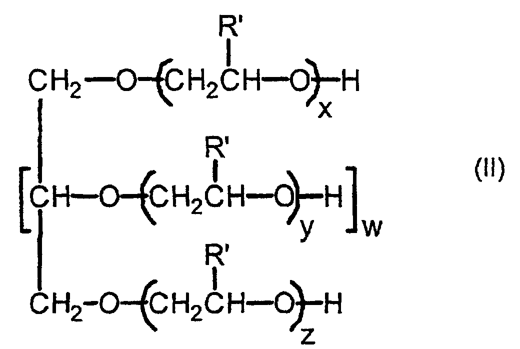
wherein w equals one to four ; B is selected from the group consisting of hydrogen or a group represented by : 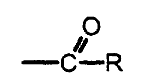 with R being selected from the group consisting of alkyl group having 6 to 22 carbon atoms, more preferably 12 to 16 carbon atoms and alkenyl groups having 6 to 22 carbon atoms, more preferably 12 to 16 carbon atoms, and wherein at least one of the B groups is represented by said 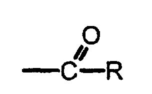 R' being selected from the group consisting of hydrogen and methyl groups ; x, y and z having a value between 0 and 60, provided that (x+y+z) equals 2 to 100, with in formula (I) the ratio of monoester / diester / triester is 45 to 90 / 5 to 35 / 1 to 20 and the ratio of formula (I) to formula (II) being a value between 3 to 0.33,
and the composition has an ecotoxicity value as measured by the LC50 test of at least 0.18 ml/L measured on Daphniae microorganisms.

17. A stable concentrated microemulsion composition of claim 16 wherein the weight-ratio of anionic detergent to the esterified polyethoxyether nonionic detergent is in the range of 3:1 to 1:3.

18. A liquid crystal composition comprising by weight: 0.1 % to 20 % of an anionic surfactant, 1 % to 50 % of a cosurfactant, 0 % to 2.5 % of a fatty acid, 0.1 % to 20 % of an esterified polyethoxyether nonionic surfactant, 0.5 % to 10 % of a water insoluble hydrocarbon or a perfume and the balance being water.

## Patentansprüche

1. Stabile Mikroemulsionszusammensetzung, die, bezogen auf das Gewicht: 0,1% bis 20% anionisches Tensid, 0,1% bis 50% Cotensid, 0% bis 2,5% Fettsäure, 0,1% bis 20% nicht-ionisches verestertes Polyethoxyethertensid, 0,1% bis 10% wasserunlöslichen Kohlenwasserstoff oder Parfüm und als Rest Wasser umfaßt, wobei das nicht-ionische veresterte Polyethoxyetherreinigungsmittel eine Mischung aus: 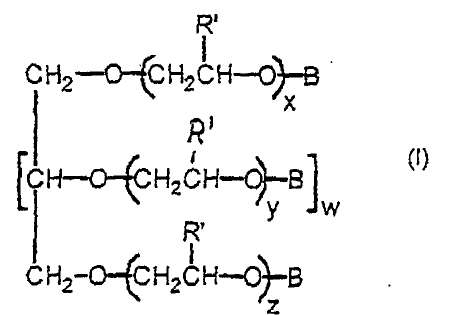 und 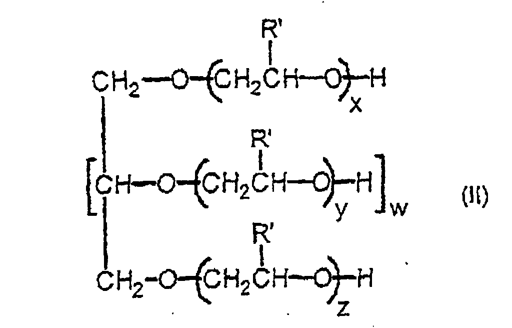 ist, wobei w 1 bis 4 ist, B ausgewählt ist aus der Gruppe bestehend aus Wasserstoff oder einer Gruppe, die durch: 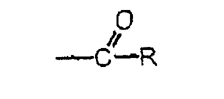 dargestellt ist, in der R ausgewählt ist aus der Gruppe bestehend aus Alkylgruppen mit 6 bis 22 Kahlenstoffatomen, bevorzugter 12 bis 16 Kohlenstoffatomen, und Alkenylgruppen mit 6 bis 22 Kohlenstoffatomen, bevorzugter 12 bis 16 Kohlenstoffatomen, und bei der mindestens eine der B-Gruppen durch das 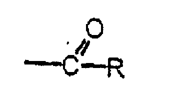 dargestellt ist, R' ausgewählt ist aus der Gruppe bestehend aus Wasserstoff und Methylgruppen, X, Y und Z einen Wert von 0 bis 60 aufweisen, mit der Maßgabe, daß (x+y+z) 2 bis 100 ist, wobei in Formel (I) das Verhältnis von Monoester/Diester/Triester 45 bis 90 / 5 bis 35 / 1 bis 20 ist und das Verhältnis von Formel (I) zu Formel (II) einen Wert von 3 bis 0,33 aufweist.

2. Stabile, klare, harte Oberflächen-reinigende Allzweckreinigungszusammensetzung, die insbesondere bei der Entfernung von öligem und fettigem Schmutz wirksam ist und in Form einer Öl-in-Wasser-Mikroemulsion (o/w) vorliegt, wobei die wäßrige Phase dieser Mikroemulsionszusammensetzung, bezogen auf das Gewicht: 0,1% bis 20% anionisches Tensid, 0% bis 2,5% Fettsäure, 0,1% bis 10% nicht-ionisches verestertes Polyethoxyethertensid, 0,1% bis 50% wassermischbares Cotensid mit im wesentlichen keiner Fähigkeit zur Lösung von öligem und fettigem Schmutz ausgewählt aus der Gruppe bestehend aus wasserlöslichen C₃- bis C₄-Alkanolen, Polypropyleriglykol, C₁- bis C₄-Alkylethern und Estern von Ethylenglykol oder Propylenglykol, aliphatischen Mono- und Carbonsäuren mit 3 bis 6 Kohlenstoffatomen im Molekül, C₉- bis C₁₅-Alkyletherpolyethenoxycarbonsäuren mit der Strukturformel R(OC₂H₄)ₙOXCOOH, in der R C₉- bis C₁₅-Alkyl ist, n eine Zahl von 4 bis 12 ist und X ausgewählt ist aus der Gruppe bestehend aus CH₂, C(O)R₁ und C(O), wobei R₁ eine C₁-bis C₃-Ethylengruppe ist, und Mono-, Di- und Tri-ethylphosphat und Wasser umfaßt, die ölige Phase dieser Mikroemulsion im wesentlichen aus wasserunmischbarem oder wasserschwerlöslichen Kohlenwasserstoff Bestand haben in einer Menge von 0,1% bis 10%, bezogen auf das Gewicht der gesamten Zusammensetzung, umfaßt, wobei das nicht-ionische veresterte Polyethoxyethertensid eine Mischung aus: 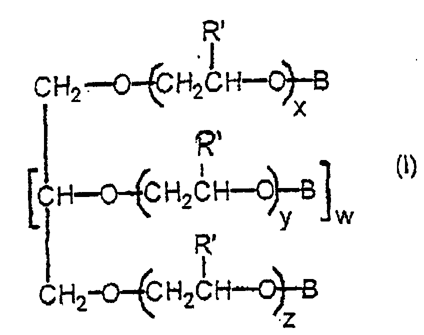 und 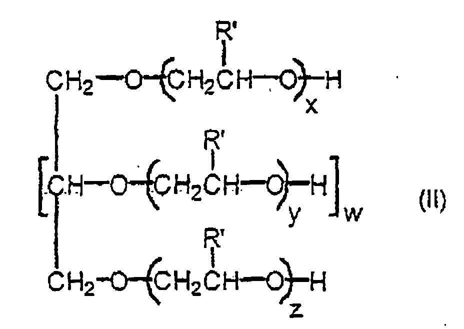 ist, wobei w 1 bis 4 ist, B ausgewählt ist aus der Gruppe bestehend aus Wasserstoff oder einer Gruppe, die durch: 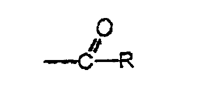 dargestellt ist, in der R ausgewählt ist aus der Gruppe bestehend aus Alkylgruppen 6 bis 22 Kohlenstoffatomen und Alkenylgruppen mit 6 bis 22 Kohlenstoffatomen, und bei der mindestens eine der B-Gruppen durch das 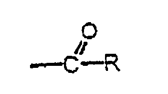 dargestellt ist, R' ausgewählt aus der Gruppe bestehend aus Wasserstoff und Methylgruppen, x, y und z einen Wert von 0 bis 60 aufweisen, mit der Maßgabe, daß (x+y+z) 2 bis 100 ist, wobei in Formel (I) das Verhältnis von Monoester/Diester/Triester 45 bis 90 / 5 bis 35 / 1 bis 20, wobei das Verhältnis von Formel (I) za Formel (II) einen Wert von 3 bis 0,33 aufweist.

3. Reinigungszusammensetzung nach Anspruch 2, die ferner ein Salz einen mehrwertigen Metallkations in einer Menge enthält, die ausreicht, um 0,5 bis 1;5 Equivalente des Kations pro Equivalent des anionischen Reinigungsmittels zu liefern.

4. Reinigungszusammensetzung nach Anspruch 3, bei der das mehrwertige Metallkation Magnesium oder Aluminium ist.

5. Reinigungszusammensetzung nach Anspruch 3, bei der die Zusammensetzung 0,9 bis 1,4 Equivalente des Kations pro Equivalent an anionischem Reinigungsmittel enthält.

6. Reinigungszusammensetzung nach Anspruch 4, bei der das mehrwertige Salz Magnesiumoxid, Magnesiumchlorid oder Magnesiumsulfat ist.

7. Reinigungszusammensetzung nach Anspruch 2, bei der die Fettsäure 8 bis 22 Kohlenstoffatome aufweist.

8. Reinigungszusammensetzung nach Anspruch 2, die 0,5 bis 15 Gew.% des Cotensids und 0,4% bis 3,0 Gew.% des Kohlenwasserstoffs enthält.

9. Zusammensetzung nach Anspruch 2, bei der Cotensid wasserlöslicher Glykolether ist.

10. Reinigungszusammensetzung nach Anspruch 9, bei der Glykolether ausgewählt ist aus der Gruppe bestehend aus Ethylenglykolmonobutylether, Diethylenmonobutylether, Triethylenglykolmonobutylether, Polypropylenglykol mit einem durchschnittlichen Molekulargewicht von 200 bis 1000 und Propylenglykoltert.butylether, Mono-, Di-, Tripropylenglykolmonobutylether.

11. Reinigungszusammensetzung nach Anspruch 10, bei der der Glykolether Ethylenglykolmonobutylether oder Diethylenglykolmonobutylether ist.

12. Reinigungszusammensetzung nach Anspruch 2, bei der das Cotensid eine aliphatische C₃- bis C₆-Carbonsäure ausgewählt aus der Gruppe bestehend aus Acrylsäure, Propionsäure, Glutarsäure, Mischungen von Glutarsäure und Bernsteinsäure und Adipinsäure und deren Mischungen ist.

13. Reinigungszusammensetzung nach Anspruch 12, bei der die aliphatische Carbonsäure eine Mischung aus Adipinsäure, Glutarsäure und Bernsteinsäure ist.

14. Reinigungszusammensetzung nach Anspruch 2, bei der das anionische Tensid ein C₉- bis C₁₅-Alkylbenzolsulfonat oder ein C₁₀- bis C₂₀-Alkansulfonat ist.

15. Reinigungszusammensetzung nach Anspruch 2, bei der das anionische Reinigungsmittel und das nicht-ionische veresterte Polyethoxyetherreinigungsmittel in einem Gewichtsverhältnis von 3:1 bis 1:3 vorhanden sind.

16. Stabile konzentrierte Mikroemulsionszusammensetzung, die, bezogen auf das Gewicht, umfaßt:
(a) 1 bis 30% anionisches Tensid,
(b) 0,5 bis 15% nicht-ionisches verestertes Polyethoxyethertensid,
(c) 0 bis 2,5% Fettsäure,
(d) 2 bis 30% Cotensid,
(e) 0,4 bis 10% wasserunlöslichen Kohlenwasserstoff oder Parfüm,
(f) 0 bis 18% mindestens einer Dicarbonsäure,
(g) 0 bis 0,2% Aininoalkylenphosphonsäure,
(h) 0 bis 1,0% Phosphorsäure,
(i) 0 bis 15% Magnesiumsulfat-heptahydrat und
(j) als Rest Wasser,
wobei das nicht-ionische veresterte Polyoxyethertensid eine Mischung aus: 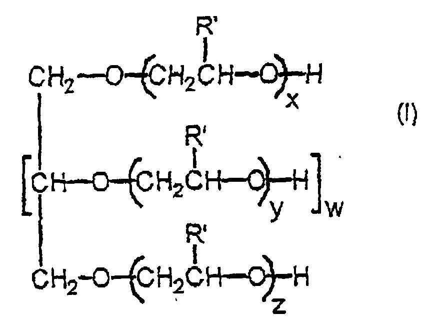 und 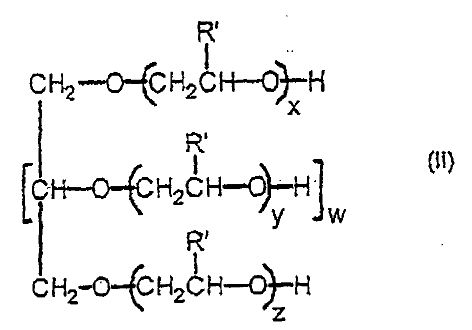 ist, wobei w 1 bis 4 ist, B ausgewählt aus der Gruppe bestehend aus Wasserstoff oder einer Gruppe, die durch 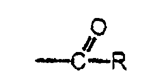 dargestellt ist, wobei R ausgewählt ist aus der Gruppe bestehend aus Alkylgruppen mit 6 bis 22 Kohlenstoffatomen, bevorzugt als 12 bis 16 Kohlenstoffatomen, und Alkenylgruppen mit 6 bis 22 Kohlenstoffatomen, bevorzugter 12 bis 16 Kohlenstoffatomen, und wobei mindestens eine der B-Gruppen durch das 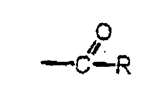 dargestellt ist, R' ausgewählt ist aus der Gruppe bestehend aus Wasserstoff und Methylgruppen, x, y und z einen Wert von 0 bis 60 aufweisen, mit der Maßgabe, daß (x+y+z) 2 bis 100 ist, wobei in Formel (I) das Verhältnis von Monoester/Diester/Triester 45 bis 90 / 5 bis 35 / 1 bis 20 ist, und das Verhältnis von Formel (I) zu Formel (II) einen Wert von 3 bis 0,33 aufweist, und
wobei die Zusammensetzung einen Ökotoxizitätswert wie gemessen anhand des LC50 Tests von mindestens 0,18 ml/l aufweist, gemessen an Daphniae Mikroorganismen.

17. Stabile konzentrierte Mikroemulsionszusammensetzung nach Anspruch 16, bei der das Gewichtsverhältnis von anionischem Reinigungsmittel zu dem nicht-ionischen veresterten Polyethoxyetherreinigungsmittel im Bereich von 3:1 bis 1:3 liegt.

18. Flüssigkristallzusammensetzung, die bezogen auf das Gewicht: 0,1% bis 20% anionisches Tensid, 1% bis 50% Cotensid, 0% bis 2,5% Fettsäure, 0,1% bis 20% nicht-ionisches verestertes Polyethoxyethertensid, 0,5% bis 10% wasserunlöslichen Kohlenwasserstoff oder Parfüm und als Rest Wasser umfaßt.

## Revendications

1. Composition en microémulsion stable, **caractérisée en ce qu'**elle comprend, en poids : 0,1 % à 20 % d'un agent tensio-actif anionique, 0,1 % à 50 % d'un co-agent tensio-actif, 0 % à 2,5 % d'un acide gras, 0,1 % à 20 % d'un agent tensio-actif non ionique du type polyéthoxyéther estérifié, 0,1 % à 10 % d'un hydrocarbure insoluble dans l'eau ou d'un parfum, le reste étant de l'eau, dans laquelle ledit détergent non ionique du type polyéthoxyéther estérifié est un mélange de : 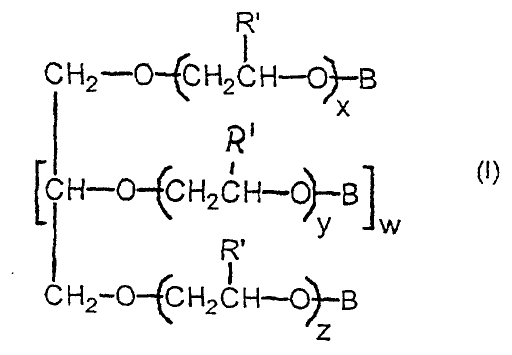 et 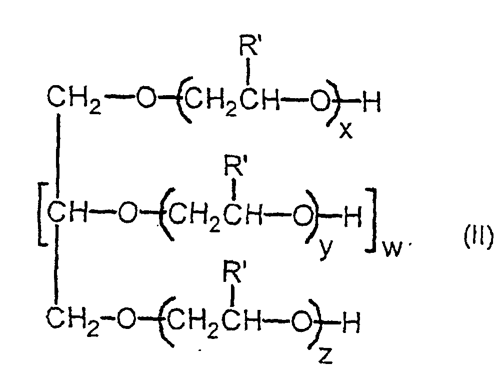 où w est égal à 1 à 4, B est choisi dans la classe formée par un atome d'hydrogène ou un groupe représenté par 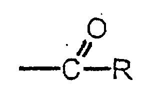 où R est choisi dans la classe formée par les groupes alkyle ayant 6 à 22 atomes de carbone, de préférence 12 à 16 atomes de carbone, et les groupes alcényle ayant 6 à 22 atomes de carbone, de préférence 12 à 16 atomes de carbone, et où au moins l'un des groupes B est représenté par ledit 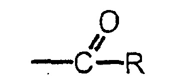 R' est choisi dans la classe formée par un atome d'hydrogène et un groupe méthyle ; x, y et z ont des valeurs comprises entre 0 et 60, à condition que (x+y+z) soit égal à 2 à 100, le rapport monoester/diester/triester de Formule (I) étant de 45 à 90/5 à 35/1, à 20, et le rapport de la Formule (I) à la Formule (II) étant une valeur comprise entre 3 et 0,33.

2. Composition nettoyante stable, limpide, à usage général pour surfaces dures, qui est particulièrement efficace pour l'élimination des salissures grasses et huileuses, qui est sous la forme d'une microémulsion du type huile dans l'eau (h/e), la phase aqueuse de ladite composition en microémulsion comprenant en poids : 0,1 % à 20 % d'un agent tensio-actif anionique ; 0 % à 2,5 % d'un acide gras ; 0,1 % à 10 % d'un agent tensio-actif non ionique du type polyéthoxyéther estérifié ; 0,1 % à 50 % d'un co-agent tensio-actif miscible à l'eau n'ayant sensiblement pas la faculté de dissoudre les salissures grasses ou huileuses, choisi dans la classe formée par les alcanols en C₃-C₄ hydrosolubles, le polypropylène-glycol et les éthers alkyle en C₁-C₄ et les esters d'éthylène-glycol ou de propylène-glycol, les acides mono- et dicarboxyliques aliphatiques contenant 3 à 6 atomes de carbone dans la molécule, les acides (alkyle en C₉-C₁₅)-éther-polyéthénoxy-carboxyliques de formule structurale R(OC₂H₄)ₙOXCOOH où R est un groupe alkyle en C₉-C₁₅, n est un nombre de 4 à 12 et X est choisi dans la classe formée par CH₂, C(O)R₁ et C(O), où R₁ est un groupe alkylène en C₁-C₃, et les phosphates de mono-, di- et triéthyle ; et de l'eau ; la phase huileuse de ladite microémulsion consistant essentiellement en un ingrédient hydrocarboné non miscible à l'eau ou difficilement soluble dans l'eau en une quantité de 0,1 % à 10 % en poids de la composition totale, dans laquelle l'agent tensio-actif non ionique du type polyéthoxyéther estérifié est un mélange de : 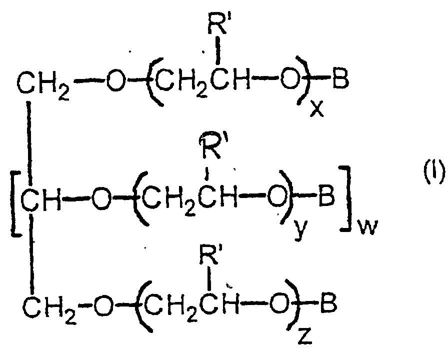 et 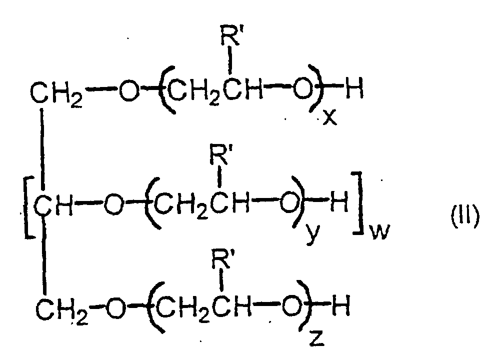 où w est égal à un à quatre ; B est choisi dans la classe formée par un atome d'hydrogène ou un groupe représenté par : 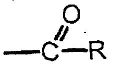 où R est choisi dans la classe formée par les groupes alkyle ayant 6 à 22 atomes de carbone et les groupes alcényle ayant 6 à 22 atomes de carbone, et où au moins l'un des groupes B est représenté par ledit 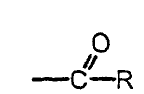 R' étant choisi dans la classe formée par un atome d'hydrogène et un groupe méthyle ; x, y et z ayant des valeurs comprises entre 0 et 60, à condition que (x+y+z) soit égal à 2 à 100, le rapport monoester/diester/triester de la formule (I) étant de 45 à 90/5 à 35/1 à 20, le rapport de la formule (I) à la formule (II) étant une valeur comprise entre 3 et 0,33.

3. Composition nettoyante selon la revendication 2, qui contient de plus un sel d'un cation métallique multivalent en une quantité suffisante pour fournir 0,5 à 1,5 équivalent dudit cation par équivalent dudit détergent anionique.

4. Composition nettoyante selon la revendication 3, dans laquelle le cation métallique multivalent est le magnésium ou l'aluminium.

5. Composition nettoyante selon la revendication 3, dans laquelle ladite composition contient 0,9 à 1,4 équivalent dudit cation par équivalent de détergent anionique.

6. Composition nettoyante selon la revendication 4, dans laquelle ledit sel multivalent est l'oxyde de magnésium, le chlorure de magnésium ou le sulfate de magnésium.

7. Composition nettoyante selon la revendication 2, dans laquelle ledit acide gras compte 8 à 22 atomes de carbone.

8. Composition nettoyante selon la revendication 2, qui contient 0,5 à 15 % en poids dudit co-agent tensio-actif et 0,4 % à 3,0 % en poids dudit hydrocarbure.

9. Composition nettoyante selon la revendication 2, dans laquelle le co-agent tensio-actif est un éther de glycol hydrosoluble.

10. Composition nettoyante selon la revendication 9, dans laquelle l'éther de glycol est choisi dans la classe formée par l'éther monobutylique d'éthylène-glycol, l'éther monobutylique de diéthylène-glycol, l'éther monobutylique de triéthylène-glycol, le polypropylène-glycol ayant un poids moléculaire moyen de 200 à 1000 et l'éther tert-butylique de propylène-glycol, l'éther monobutylique de mono-, di-, tripropylène-glycol.

11. Composition nettoyante selon la revendication 10, dans laquelle l'éther de glycol est l'éther monobutylique d'éthylène-glycol ou l'éther monobutylique de diéthylène-glycol.

12. Composition nettoyante selon la revendication 2, dans laquelle le co-agent tensio-actif est un acide carboxylique aliphatique en C₃-C₆ choisi dans la classe formée par l'acide acrylique, l'acide propionique, l'acide glutarique, les mélanges d'acide glutarique et d'acide succinique et l'acide adipique, et leurs mélanges.

13. Composition nettoyante selon la revendication 12, dans laquelle l'acide carboxylique aliphatique est un mélange d'acide adipique, d'acide glutarique et d'acide succinique.

14. Composition nettoyante selon la revendication 2, dans laquelle l'agent tensio-actif anionique est un (alkyle en C₉-C₁₅)benzènesulfonate ou un (alcane en C₁₀-C₂₀)-sulfonate.

15. Composition nettoyante selon la revendication 2, dans laquelle le détergent anionique et le détergent non ionique du type polyéthoxyéther estérifié sont présents en un rapport en poids de 3:1 à 1:3.

16. Composition en microémulsion concentrée stable, comprenant, en poids :
(a) 1 à 30 % d'un agent tensio-actif anionique ;
(b) 0,5 à 15 % d'un agent tensio-actif non ionique du type polyéthoxyéther estérifié ;
(c) 0 à 2,5 % d'un acide gras ;
(d) 2 à 30 % d'un co-agent tensio-actif ;
(e) 0,4 à 10 % d'un hydrocarbure insoluble dans l'eau ou d'un parfum ;
(f) 0 à 18 % d'au moins un acide dicarboxylique ;
(g) 0 à 0,2 % d'un acide aminoalkylène-phosphonique ;
(h) 0 à 1,0 % d'acide phosphorique ;
(i) 0 à 15 % de sulfate de magnésium heptahydraté ; et
(j) le reste étant de l'eau,
ledit agent tensio-actif non ionique du type polyéthoxyéther estérifié étant un mélange de : 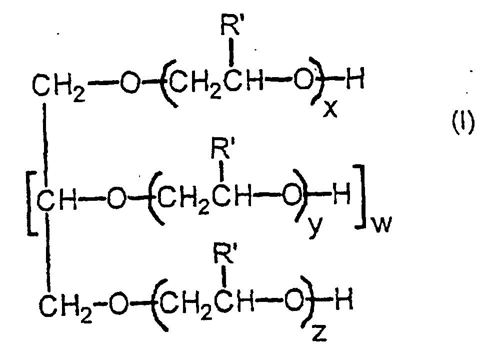 et 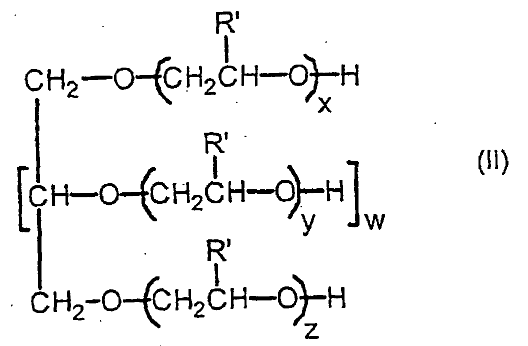 où w est égal à 1 à 4, B est choisi dans la classe formée par un atome d'hydrogène ou un groupe représenté par 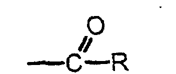 R étant choisi dans la classe formée par les groupes alkyle ayant 6 à 22 atomes de carbone, de préférence 12 à 16 atomes de carbone, et les groupes alcényle ayant 6 à 22 atomes de carbone, de préférence 12 à 16 atomes de carbone, et où au moins l'un des groupes B est représenté par ledit 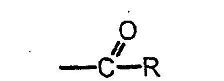 R' étant choisi dans la classe formée par un atome d'hydrogène et un groupe méthyle ; x, y et z ayant des valeurs comprises entre 0 et 60, à condition que (x+y+z) soit égal à 2 à 100, le rapport monoester/diester/triester de Formule (I) étant de 45 à 90/5 à 35/1 à 20, et le rapport de la Formule (I) à la Formule (II) étant une valeur comprise entre 3 et 0,33,
et la composition a un indice d'écotoxicité, tel que mesuré par le test LC50, d'au moins 0,18 ml/ℓ mesuré sur des microorganismes du genre *Daphniae*.

17. Composition en microémulsion concentrée stable selon la revendication 16, dans laquelle le rapport en poids du détergent anionique au détergent non ionique du type polyéthoxyéther estérifié est compris dans l'intervalle de 3:1 à 1:3.

18. Composition à cristal liquide comprenant, en poids : 0,1 % à 20 % d'un agent tensio-actif anionique, 1 % à 50 % d'un co-agent tensio-actif, 0 % à 2,5 % d'un acide gras, 0,1 % à 20 % d'un agent tensio-actif non ionique du type polyéthoxyéther estérifié, 0,5 % à 10 % d'un hydrocarbure insoluble dans l'eau ou d'un parfum, le reste étant de l'eau.
